# FASCICULE DE BREVET EUROPEEN

(11) **EP 3 173 345 B1**
(45) Date de publication et mention de la délivrance du brevet: **28.03.2018**
(21) Numéro de dépôt: 16195414.4
(22) Date de dépôt: 25.10.2016
(51) Int. Cl.: B65C 9/42, B65H 7/12, B65H 7/06

(54) **SYSTÈME DE DÉTECTION PAR ULTRASON**
ULTRASCHALL-DETEKTIONSSYSTEM
ULTRASONIC DETECTION SYSTEM

(30) Priorité: 24.11.2015 FR 1561279
(43) Date de publication de la demande: 31.05.2017
(73) Titulaire: Schneider Electric Industries SAS, 92500 Rueil-Malmaison (FR)
(72) Inventeur: LAFOREST, Benoît, 76440 Sommery (FR)
(74) Mandataire: Dufresne, Thierry

(56) Documents cités:
- EP-A1- 2 570 354
- DE-U1-202007 004 364
- DE-U1-202010 011 113

## Description

### Domaine technique de l'invention

La présente invention se rapporte à un système de détection par ultrasons comprenant un émetteur et un récepteur. Le système sera parfaitement adapté à la détection d'étiquettes disposées de manière adjacente sur un support et séparées entre elles par un espacement. Le système de détection sera par exemple mis en oeuvre sous la forme d'une fourche à ultrasons.

### Etat de la technique

Pour l'étiquetage de produits, des étiquettes sont disposées sur un support, juste avant d'être apposées sur un produit. Sur le support, les étiquettes sont séparées entre elles par un espacement.

La détection des étiquettes par ultrasons sera nécessaire lorsque le contraste optique entre les étiquettes et son support est insuffisant. Ce sera notamment le cas lorsque les étiquettes sont transparentes et le support opaque, lorsque les étiquettes et le support sont tous deux transparents ou, de manière plus générale, lorsque le support et les étiquettes présentent un niveau d'opacité proche.

Dans ces situations, afin de détecter la présence des étiquettes sur le support, il est connu d'utiliser un système de détection par ultrasons ayant la forme d'une fourche. Le support, qui est généralement constitué d'une bande, défile entre les deux branches de la fourche. Une branche de la fourche comporte l'émetteur, chargé d'envoyer un faisceau d'ondes ultrasonores et l'autre branche de la fourche comporte le récepteur, chargé de capter le faisceau atténué par son passage à travers le support et/ou les étiquettes. La fourche est calibrée pour distinguer les étiquettes par rapport au support.

Le brevet US6314054B1 décrit une architecture de ce type dans laquelle l'émetteur et le récepteur sont chacun logés dans une branche distincte de la fourche. Pour certaines applications, afin d'obtenir le placement optimal de l'étiquette sur l'objet à étiqueter, la détection de l'étiquette doit se dérouler au plus près de l'objet. La distance entre la bande et l'objet à étiqueter devant être la plus faible possible, l'épaisseur d'au moins une des branches de la fourche doit être la plus faible possible. Les solutions actuelles, telles que celle décrite dans le brevet US6314054B1 ne sont pas adaptées, car trop encombrantes pour ces applications

La demande de brevet EP2568469A1 propose pour sa part de déporter l'émetteur et/ou le récepteur. Pour cela, un déflecteur est employé dans la partie émetteur et/ou dans la partie récepteur. Avec une telle architecture, il est difficile d'obtenir un contraste de détection et un rendement satisfaisants dans un encombrement limité.

Les documents brevet référencés DE202007004364U1 et EP2570354A1 décrivent également des systèmes de détection d'étiquettes. Le document brevet référencé DE202010011113U1 décrit un système de détection d'étiquettes selon le préambule de la revendication 1.

Le but de l'invention est de proposer un système de détection, pouvant par exemple se présenter sous la forme d'une fourche, qui permet d'obtenir, dans une application de détection d'étiquettes, un contraste et un rendement satisfaisants, même dans un encombrement limité.

### Exposé de l'invention

Ce but est atteint par un système de détection d'étiquettes disposées sur un support et espacées entre elles d'un espacement, ledit système comprenant :
- une partie émetteur comportant un émetteur agencé pour émettre un faisceau d'ondes ultrasonores en direction du support supportant lesdites étiquettes,
- une partie récepteur séparée de la partie émetteur de sorte que le support supportant les étiquettes puisse défiler dans un plan situé entre la partie émetteur et la partie récepteur, suivant une direction, dite direction de défilement, et dans un plan, dit plan de défilement, la partie récepteur comprenant un récepteur agencé pour générer un signal de sortie à partir d'un faisceau d'ondes ultrasonores atténué par le support et/ou les étiquettes,
- la partie émetteur ou la partie récepteur étant agencée pour que le faisceau ultrasonore émis par l'émetteur couvre, sur le support supportant les étiquettes, une surface totale dans laquelle la surface occupée par l'espacement entre deux étiquettes est plus importante que la surface occupée par les étiquettes.

Selon une particularité de l'invention, la partie émetteur ou la partie récepteur comporte un déflecteur présentant une forme définissant ladite surface totale.

Selon une autre particularité, la partie émetteur est agencée pour émettre le faisceau d'ondes ultrasonores suivant une direction appartenant à un plan décalé angulairement par rapport au plan perpendiculaire à la direction de défilement des étiquettes.

Selon un premier mode de réalisation, le dispositif comporte un dispositif de renvoi d'angle agencé dans la partie récepteur et le dispositif de renvoi d'angle comporte un premier déflecteur agencé pour dévier le faisceau d'ondes ultrasonores atténué vers un deuxième déflecteur, ledit deuxième déflecteur étant agencé pour dévier le faisceau d'ondes ultrasonores atténué vers le récepteur.

Dans ce premier mode de réalisation, le premier déflecteur comporte une forme allongée suivant un axe perpendiculaire à sa direction de déviation.

Dans ce premier mode de réalisation, le deuxième déflecteur est réalisé suivant un plan perpendiculaire au plan de défilement du support et orienté autour d'un axe perpendiculaire au plan de défilement de manière à dévier le faisceau d'ondes ultrasonores reçu du premier déflecteur vers le récepteur suivant une direction située dans un plan incliné par rapport à un plan perpendiculaire au plan de défilement et parallèle à la direction de défilement du support supportant les étiquettes.

Selon un deuxième mode de réalisation de l'invention, le système comporte un dispositif de renvoi d'angle agencé dans la partie émetteur et le dispositif de renvoi d'angle comporte un premier déflecteur agencé pour dévier le faisceau d'ondes ultrasonores émis par l'émetteur vers un deuxième déflecteur suivant une direction de déviation formant un angle compris entre 0 et 90° par rapport à la direction de défilement, ledit deuxième déflecteur étant agencé pour dévier le faisceau d'ondes ultrasonores émis vers le récepteur.

Dans ce deuxième mode de réalisation, le premier déflecteur est préférentiellement réalisé suivant un plan perpendiculaire au plan de défilement du support et orienté autour d'un axe perpendiculaire au plan de défilement de manière à dévier le faisceau d'ondes ultrasonores reçu de l'émetteur vers le deuxième déflecteur.

Dans ce deuxième mode de réalisation, le deuxième déflecteur comporte préférentiellement une forme allongée suivant un axe perpendiculaire à sa direction de déviation.

Selon l'invention, le système est réalisé sous la forme d'une fourche présentant une première branche dans laquelle est agencée la partie émetteur et une deuxième branche dans laquelle est agencée la partie récepteur.

### Brève description des figures

D'autres caractéristiques et avantages vont apparaître dans la description détaillée qui suit faite en regard des dessins annexés dans lesquels :
- la figure 1 représente, vu en perspective, le système de détection de l'invention se présentant sous la forme d'une fourche, adaptée à la détection d'étiquettes sur un support, selon un premier mode de réalisation,
- la figure 2 illustre le principe de fonctionnement de l'invention,

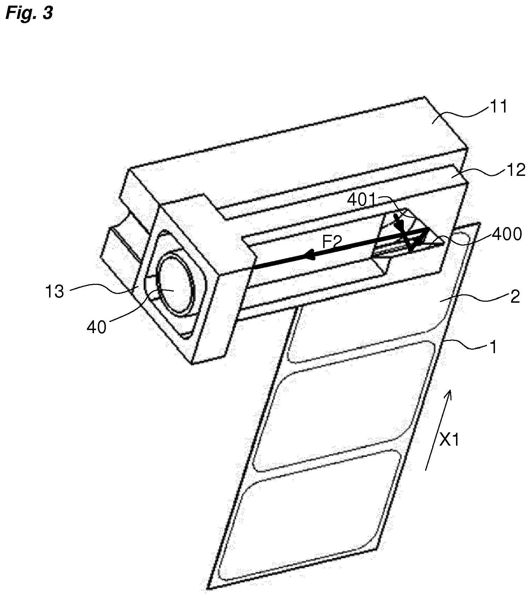

- la figure 3 montre, en vue ouverte, la deuxième branche du système de détection de l'invention, selon le premier mode de réalisation,

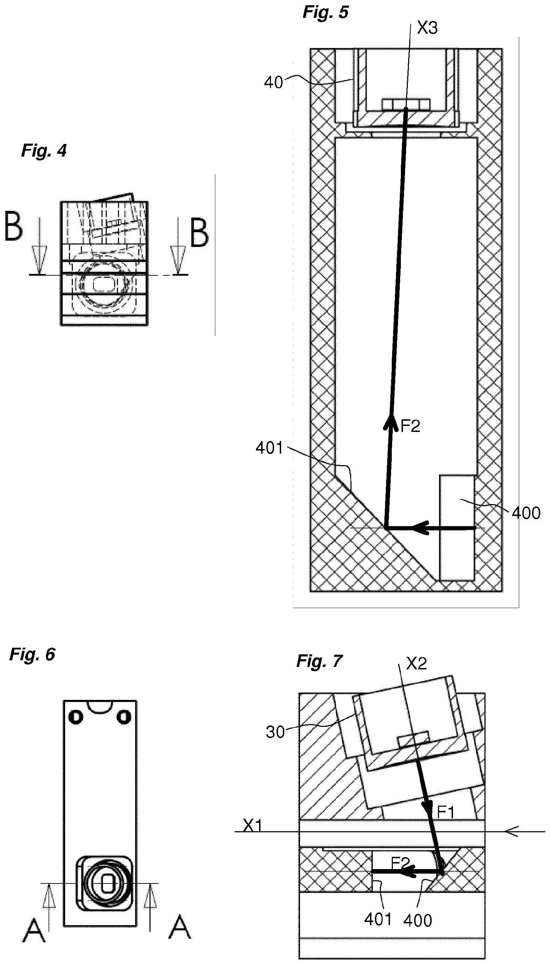

- la figure 4 représente le système de détection de l'invention en vue de face, selon le premier mode de réalisation,
- la figure 5 représente une coupe longitudinale du système de détection réalisée sur sa deuxième branche, suivant B-B sur la figure 4,
- la figure 6 représente le système de détection de l'invention en vue de dessus, selon le premier mode de réalisation,
- la figure 7 représente une coupe transversale du système de détection réalisée selon A-A sur la figure 6,
- la figure 8 représente une coupe longitudinale du système de détection suivant la première branche, et permet d'illustrer le principe de fonctionnement du deuxième mode de réalisation de l'invention.

### Description détaillée d'au moins un mode de réalisation

L'invention concerne un système de détection à ultrasons employé pour la détection d'une cible en mode barrage. L'invention est parfaitement adaptée pour la détection d'étiquettes 2 disposées sur un support. La détection par ultrasons sera nécessaire lorsque les étiquettes et le support présentent un niveau d'opacité proche. Comme déjà précisé ci-dessus, ce sera par exemple le cas lorsque les étiquettes sont transparentes et le support opaque ou lorsque les étiquettes et le support sont toutes les deux transparentes. Dans la suite de la description nous considérerons un support sous la forme d'une bande 1 transparente et des étiquettes positionnées à intervalles réguliers sur ladite bande.

Les étiquettes 2 sont disposées sur la bande, un espacement identique de largeur e étant toujours laissé entre deux étiquettes 2 successives.

Le système de détection comporte une partie émetteur comprenant un émetteur 30 agencé pour émettre un faisceau F1 d'ondes ultrasonores en direction de la bande 1 supportant les étiquettes et une partie récepteur comportant un récepteur 40 agencé pour générer un signal de sortie représentatif du faisceau F2 d'ondes ultrasonores, issu de la transmission du faisceau F1 d'ondes ultrasonores à travers la bande et qui a été atténué par la bande et/ou les étiquettes. Une unité de traitement (non représentée) est ensuite destinée à interpréter le signal correspondant au faisceau F2 d'ondes ultrasonores atténué en vue de déterminer la présence des étiquettes.

En référence aux figures annexées, la partie émetteur et la partie récepteur sont préférentiellement logées dans un boîtier se présentant sous la forme d'une fourche comportant deux branches parallèles, une première branche 11 dédiée à l'émission du faisceau d'ondes ultrasonores et une deuxième branche 12 dédiée à la réception du faisceau d'ondes ultrasonores atténué. La première branche 11 et la deuxième branche 12 sont reliées entre elles à une de leurs extrémités par une partie de jonction 13. La bande 1 supportant les étiquettes 2 est destinée à défiler suivant une direction X1 de défilement longitudinale entre les deux branches 11, 12 de la fourche et dans un plan, dit plan de défilement, qui est transversal par rapport à la direction X2 du faisceau d'ondes ultrasonores émis.

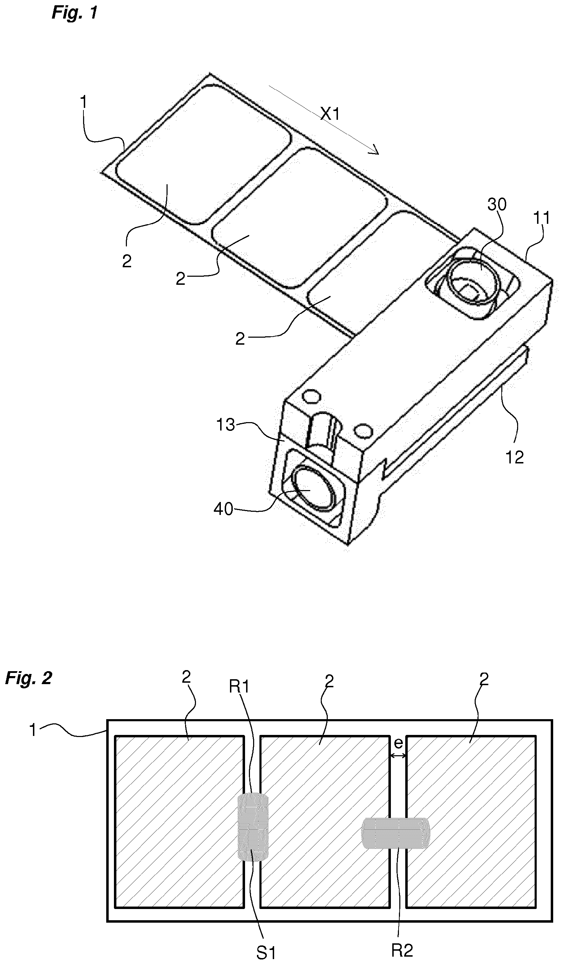

L'invention vise à proposer une solution de détection, avec au moins un transducteur déporté de manière à proposer une fourche présentant une épaisseur limitée. Dans cet encombrement réduit, la solution de l'invention permet de maximiser le contraste entre les étiquettes 2 et la bande 1 et de conserver une énergie acoustique suffisante pour réaliser la détection. En ce qui concerne le contraste, il s'agira de faire en sorte que, sur la surface totale S1 (figure 2) couverte par le faisceau sur la cible (bande+étiquettes), la surface occupée par l'espacement e soit plus importante que la surface occupée par les étiquettes, même si la première branche 11 ou la deuxième branche 12 est réalisée dans un encombrement réduit. Plus précisément, sur la surface totale S1, la surface occupée par l'espacement sera au moins deux fois plus importante que celle occupée par les étiquettes.

Selon l'invention, la partie émetteur ou la partie récepteur est agencée pour remplir cet objectif. Préférentiellement, la partie émetteur ou la partie récepteur comporte ainsi un déflecteur dont la forme définit ladite surface totale.

Selon l'invention, le système de détection utilise un dispositif de renvoi d'angle dans lequel est inclus le déflecteur décrit ci-dessus. On distingue deux modes de réalisation distincts. Dans un premier mode de réalisation, le dispositif de renvoi d'angle est destiné à dévier le faisceau F2 d'ondes ultrasonores atténué vers le récepteur. Dans un deuxième mode de réalisation, le dispositif de renvoi d'angle est destiné à dévier le faisceau F1 d'ondes ultrasonores émis par l'émetteur en direction de la cible et du récepteur.

Dans la suite de la description et sur les figures annexées, nous détaillerons principalement le premier mode de réalisation mais il faut comprendre que l'architecture et le principe de fonctionnement sont globalement identiques pour le deuxième mode de réalisation. L'architecture du deuxième mode de réalisation est juste inversée par rapport à celle du premier mode de réalisation.

Dans les deux modes de réalisation, le faisceau F1 d'ondes ultrasonores émis présente la particularité de frapper la cible formée par la bande 1 supportant les étiquettes 2 suivant la direction X2 qui appartient à un plan décalé angulairement par rapport à un plan perpendiculaire à la direction X1 de défilement des étiquettes.

En référence à la figure 1, dans le premier mode de réalisation, le récepteur 40 est déporté vers la partie de jonction 13 de la fourche de manière à recevoir le faisceau d'ondes ultrasonores atténué suivant une direction X3 située dans un plan incliné par rapport à un plan perpendiculaire au plan de défilement et orienté selon la direction de défilement de la bande supportant les étiquettes de manière à limiter les interférences.

Le dispositif de renvoi d'angle est situé dans la partie récepteur et situé sur le trajet du faisceau F2 d'ondes ultrasonores atténué pour diriger ce faisceau vers le récepteur 40. Ce dispositif de renvoi d'angle est positionné à l'extrémité opposée à la partie de jonction de la deuxième branche 12 de la fourche et comporte deux déflecteurs 400, 401 agencés pour dévier le faisceau F2 d'ondes ultrasonores atténué. Le premier déflecteur 400 est agencé pour dévier le faisceau F2 d'ondes ultrasonores atténué par la bande 1 et/ou les étiquettes 2 vers le deuxième déflecteur 401 suivant une direction sensiblement parallèle à la direction de défilement X1 de la bande 1. Bien entendu, on pourrait imaginer que le premier déflecteur 400 soit agencé pour dévier le faisceau d'ondes ultrasonores atténué suivant une direction de déviation différente, formant par exemple un angle compris entre 0 et 90° par rapport à la direction de défilement X1 dans tous les plans de l'espace.

Le premier déflecteur 400 comporte préférentiellement une forme allongée suivant un axe perpendiculaire à sa direction de déviation. La longueur du premier déflecteur 400 est choisie bien supérieure à la largeur e de l'espacement de manière à récolter le maximum d'énergie acoustique dans l'encombrement prévu. La largeur du premier déflecteur 400 est choisie en fonction de la contrainte d'encombrement sur l'épaisseur de la branche et en tenant compte de l'énergie acoustique à transmettre et du contraste. Le premier déflecteur 400 comporte une surface inclinée, plane ou concave, dont l'inclinaison est choisie selon la direction de déviation à donner au faisceau. Préférentiellement, il possède une forme générale rectangulaire dont la largeur est choisie supérieure à la largeur e de l'espacement présent entre deux étiquettes successives sur la bande.

Le deuxième déflecteur 401 comporte une surface, plane ou concave, destinée à dévier le faisceau d'ondes ultrasonores reçu du premier déflecteur 400 vers le récepteur 40, suivant la direction X3 définie ci-dessus. Le deuxième déflecteur 401, réalisé sous la forme d'une surface plane, est orienté suivant un plan, préférentiellement perpendiculaire au plan de défilement de la bande et orienté de manière adaptée autour d'un axe perpendiculaire au plan de défilement pour dévier le faisceau.

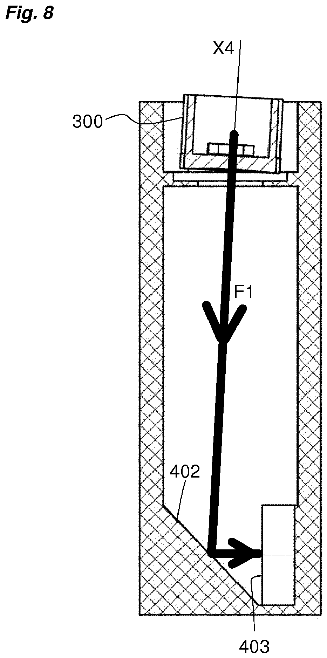

Dans le deuxième mode de réalisation évoqué ci-dessus et illustré par la figure 8, l'émetteur 300 est déporté vers la partie de jonction de la fourche et le dispositif de renvoi d'angle est agencé dans la première branche pour diriger le faisceau d'ondes ultrasonores émis par l'émetteur en direction de la cible suivant une direction équivalente à la direction X2 déjà définie pour le premier mode de réalisation décrit ci-dessus. Le récepteur est alors agencé dans la deuxième branche et reçoit directement le faisceau F2 d'ondes ultrasonores atténué après son passage à travers la cible.

Dans ce deuxième mode de réalisation, l'émetteur 300 est orienté de manière à émettre un faisceau d'ondes ultrasonores suivant une direction X4 située dans un plan incliné par rapport à un plan perpendiculaire au plan de défilement et parallèle à la direction de défilement de la bande supportant les étiquettes. Le degré d'inclinaison de l'émetteur par rapport à la normale au plan de défilement et sa position par rapport à la bande permet d'agir sur le niveau des interférences.

Le dispositif de renvoi d'angle de la partie émetteur est situé sur le trajet du faisceau F1 d'ondes ultrasonores émis par l'émetteur 300. Le dispositif de renvoi d'angle est positionné à l'extrémité opposée à la partie de jonction 13 de la première branche de la fourche et comporte deux déflecteurs agencés pour dévier le faisceau F1 d'ondes ultrasonores émis pour le diriger vers la bande suivant une direction qui appartient à un plan décalé angulairement par rapport à un plan perpendiculaire à la direction X1 de défilement des étiquettes.

Le premier déflecteur 402 comporte une surface, plane ou concave, destinée à dévier le faisceau F1 d'ondes ultrasonores reçu de l'émetteur 300 vers le deuxième déflecteur 403. Le premier déflecteur 402, lorsqu'il est réalisé sous la forme d'une surface plane, est orienté suivant un plan, préférentiellement perpendiculaire au plan de défilement de la bande et orienté de manière adaptée autour d'un axe perpendiculaire au plan de défilement pour dévier le faisceau d'ondes ultrasonores en direction du deuxième déflecteur 403.

Dans ce deuxième mode de réalisation, le deuxième déflecteur 403 est agencé pour dévier le faisceau d'ondes ultrasonores reçu du premier déflecteur 402 en direction de la bande et selon la direction X2 déjà définie pour le premier mode de réalisation.

Comme pour le premier mode de réalisation, le deuxième déflecteur 403 comporte préférentiellement une forme allongée suivant un axe perpendiculaire à sa direction de déviation. Sa forme, son agencement et les avantages apportés sont identiques à ceux décrits ci-dessus pour le premier déflecteur 400 dans le premier mode de réalisation.

Dans ce deuxième mode de réalisation, le récepteur est positionné de manière à recevoir le faisceau d'ondes ultrasonores dévié par le deuxième déflecteur suivant la direction X2 déjà définie pour le premier mode de réalisation.

Préférentiellement, le diaphragme de l'émetteur dans le premier mode de réalisation et/ou le diaphragme du récepteur dans le deuxième mode de réalisation, pourra avoir une forme générale quasi-rectangulaire en vue de récolter majoritairement les ondes ultrasonores ayant frappées au niveau de l'espacement présent entre deux étiquettes.

La solution présente ainsi de nombreux avantages. Elle permet une détection précise des étiquettes supportées par la bande. Cette précision de détection est garantie dans un encombrement limité. En effet, même si la première branche ou la deuxième branche de la fourche présente une hauteur réduite, la forme allongée du déflecteur dans une direction transversale par rapport à la direction de défilement de la bande permet de conserver un contraste et un rendement satisfaisants. La figure 2 permet de mieux comprendre l'invention. Le rectangle R1 correspond à la surface S1 couverte par le faisceau d'ondes ultrasonores sur la bande avec le système de détection de l'invention. Le rectangle R2 correspond à la surface couverte par le faisceau d'ondes ultrasonores sur la bande en employant un système de détection déjà connu dans l'état de la technique. De cette figure, on comprend que le contraste sera supérieur avec la solution de l'invention.

## Revendications

1. Système de détection d'étiquettes (2) disposées sur un support et espacées entre elles d'un espacement (e), ledit système comprenant :
- une partie émetteur comportant un émetteur (30) agencé pour émettre un faisceau (F1) d'ondes ultrasonores en direction du support supportant lesdites étiquettes,
- une partie récepteur séparée de la partie émetteur de sorte que le support (1) supportant les étiquettes puisse défiler dans un plan situé entre la partie émetteur et la partie récepteur suivant une direction dite direction de défilement (X1), et dans un plan dit plan de défilement, la partie récepteur comprenant un récepteur (40) agencé pour générer un signal de sortie à partir d'un faisceau (F2) d'ondes ultrasonores atténué par le support et/ou les étiquettes,
**caractérisé en ce que** la partie émetteur ou la partie récepteur est agencée pour que le faisceau (F1) d'ondes ultrasonores émis par l'émetteur couvre, sur le support supportant les étiquettes (2), une surface (S1) totale dans laquelle la surface occupée par l'espacement entre deux étiquettes successives est plus importante que la surface occupée par les étiquettes.

2. Système selon la revendication 1, **caractérisé en ce que** la partie émetteur ou la partie récepteur comporte un déflecteur (400) présentant une forme définissant ladite surface totale.

3. Système selon la revendication 1, **caractérisé en ce que** la partie émetteur est agencée pour émettre le faisceau d'ondes ultrasonores suivant une direction appartenant à un plan décalé angulairement par rapport au plan perpendiculaire à la direction de défilement (X1) des étiquettes.

4. Système de détection selon la revendication 1, **caractérisé en ce qu'**il comporte un dispositif de renvoi d'angle agencé dans la partie récepteur et **en ce que** le dispositif de renvoi d'angle comporte un premier déflecteur (400) agencé pour dévier le faisceau (F2) d'ondes ultrasonores atténué vers un deuxième déflecteur (401), ledit deuxième déflecteur étant agencé pour dévier le faisceau d'ondes ultrasonores atténué vers le récepteur (40).

5. Système selon la revendication 4, **caractérisé en ce que** le premier déflecteur comporte une forme allongée suivant un axe perpendiculaire à sa direction de déviation.

6. Système selon la revendication 4, **caractérisé en ce que** le deuxième déflecteur (401) est réalisé suivant un plan perpendiculaire au plan de défilement du support (1) et orienté autour d'un axe perpendiculaire au plan de défilement de manière à dévier le faisceau d'ondes ultrasonores reçu du premier déflecteur vers le récepteur suivant une direction (X3) située dans un plan incliné par rapport à un plan perpendiculaire au plan de défilement et parallèle à la direction de défilement du support supportant les étiquettes.

7. Système de détection selon la revendication 1, **caractérisé en ce qu'**il comporte un dispositif de renvoi d'angle agencé dans la partie émetteur et **en ce que** le dispositif de renvoi d'angle comporte un premier déflecteur (402) agencé pour dévier le faisceau (F1) d'ondes ultrasonores émis par l'émetteur vers un deuxième déflecteur suivant une direction de déviation formant un angle compris entre 0 et 90° par rapport à la direction de défilement, ledit deuxième déflecteur étant agencé pour dévier le faisceau d'ondes ultrasonores émis vers le récepteur.

8. Système selon la revendication 7, **caractérisé en ce que** le premier déflecteur (402) est réalisé suivant un plan perpendiculaire au plan de défilement du support (1) et orienté autour d'un axe perpendiculaire au plan de défilement de manière à dévier le faisceau d'ondes ultrasonores reçu de l'émetteur vers le deuxième déflecteur (403).

9. Système selon la revendication 7 ou 8, **caractérisé en ce que** le deuxième déflecteur (403) comporte une forme allongée suivant un axe perpendiculaire à sa direction de déviation.

10. Système selon l'une des revendications 1 à 9, **caractérisé en ce qu'**il comporte une fourche présentant une première branche dans laquelle est agencée la partie émetteur et une deuxième branche dans laquelle est agencée la partie récepteur.

## Patentansprüche

1. System (2) zum Detektieren von Etiketten, die auf einem Träger angeordnet sind und voneinander durch einen Zwischenraum (e) getrennt sind, wobei das System Folgendes umfasst:
- einen Senderteil, der einen Sender (30) enthält, der dafür ausgelegt ist, ein Ultraschallwellenbündel (F1) in Richtung des Trägers, der die Etiketten trägt, auszusenden,
- einen Empfängerteil, der von dem Senderteil beabstandet ist, derart, dass sich der Träger (1), der die Etiketten trägt, in einer Ebene, die sich zwischen dem Senderteil und dem Empfängerteil befindet, in einer Richtung, die Vorbeibewegungsrichtung (X1) genannt wird, und in einer Ebene, die Vorbeibewegungsebene genannt wird, vorbeibewegen kann, wobei der Empfängerteil einen Empfänger (40) enthält, der dafür ausgelegt ist, ein Ausgangssignal anhand eines Ultraschallwellenbündels (F2), das durch den Träger und/oder die Etiketten gedämpft worden ist, zu erzeugen,
**dadurch gekennzeichnet, dass** der Senderteil oder der Empfängerteil dafür ausgelegt ist, dass das von dem Sender ausgesendete Ultraschallwellenbündel (F1) auf dem Träger, der die Etiketten (2) trägt, eine Gesamtoberfläche (S1) abdeckt, in der die von dem Zwischenraum zwischen den aufeinander folgenden Etiketten eingenommene Oberfläche größer ist als die Oberfläche, die von den Etiketten eingenommen wird.

2. System nach Anspruch 1, **dadurch gekennzeichnet, dass** der Senderteil oder der Empfängerteil eine Ablenkeinrichtung (400) aufweist, die eine die Gesamtoberfläche definierende Form aufweist.

3. System nach Anspruch 1, **dadurch gekennzeichnet, dass** der Senderteil dafür ausgelegt ist, das Ultraschallwellenbündel in einer Richtung auszusenden, die zu einer Ebene gehört, die in Winkelrichtung in Bezug auf die Ebene, die zu der Vorbeibewegungsrichtung (X1) der Etiketten senkrecht ist, versetzt ist.

4. Detektionssystem nach Anspruch 1, **dadurch gekennzeichnet, dass** es eine Winkelumlenkvorrichtung umfasst, die in dem Empfängerteil angeordnet ist, und dass die Winkelumlenkvorrichtung eine erste Ablenkeinrichtung (400) umfasst, die dafür ausgelegt ist, das gedämpfte Ultraschallwellenbündel (F2) zu einer zweiten Ablenkeinrichtung (401) abzulenken, wobei die zweite Ablenkeinrichtung dafür ausgelegt ist, das gedämpfte Ultraschallwellenbündel zu dem Empfänger (40) abzulenken.

5. System nach Anspruch 4, **dadurch gekennzeichnet, dass** die erste Ablenkeinrichtung längs einer Achse senkrecht zu ihrer Ablenkrichtung eine langgestreckte Form aufweist.

6. System nach Anspruch 4, **dadurch gekennzeichnet, dass** die zweite Ablenkeinrichtung (401) in einer Ebene, die zu der Vorbeibewegungsrichtung des Trägers (1) senkrecht ist, verwirklicht ist und um eine Achse, die zu der Vorbeibewegungsebene senkrecht ist, orientiert ist, derart, dass sie das von der ersten Ablenkeinrichtung empfangene Ultraschallwellenbündel zu dem Empfänger in einer Richtung (X3) ablenkt, die in einer Ebene liegt, die in Bezug auf eine Ebene, die zu der Vorbeibewegungsebene senkrecht und zu der Vorbeibewegungsrichtung des die Etiketten tragenden Trägers parallel ist, geneigt ist.

7. Detektionssystem nach Anspruch 1, **dadurch gekennzeichnet, dass** es eine Winkelumlenkvorrichtung umfasst, die in dem Senderteil angeordnet ist, und dass die Winkelumlenkvorrichtung eine erste Ablenkeinrichtung (402) umfasst, die dafür ausgelegt ist, das von dem Sender ausgesendete Ultraschallwellenbündel (F1) zu einer zweiten Ablenkeinrichtung in einer Ablenkrichtung abzulenken, die einen Winkel im Bereich von 0 bis 90° in Bezug auf die Vorbeibewegungsrichtung bildet, wobei die zweite Ablenkeinrichtung dafür ausgelegt ist, das ausgesendete Ultraschallwellenbündel zu dem Empfänger abzulenken.

8. System nach Anspruch 7, **dadurch gekennzeichnet, dass** die erste Ablenkeinrichtung (402) in einer Ebene senkrecht zu der Vorbeibewegungsebene des Trägers (1) verwirklicht ist und um eine Achse senkrecht zu der Vorbeibewegungsebene orientiert ist, derart, dass das von dem Sender empfangene Ultraschallwellenbündel zu der zweiten Ablenkeinrichtung (403) abgelenkt wird.

9. System nach Anspruch 7 oder 8, **dadurch gekennzeichnet, dass** die zweite Ablenkeinrichtung (403) längs einer Achse senkrecht zu ihrer Ablenkrichtung eine langgestreckte Form aufweist.

10. System nach einem der Ansprüche 1 bis 9, **dadurch gekennzeichnet, dass** es eine Gabel umfasst, die einen ersten Schenkel, in dem der Senderteil angeordnet ist, und einen zweiten Schenkel, in dem der Empfängerteil angeordnet ist, aufweist.

## Claims

1. System for detecting labels (2) arranged on a support and spaced apart from one another by a spacing (e), said system comprising:
- a transmitter part comprising a transmitter (30) designed to transmit a beam (F1) of ultrasonic waves towards the support which carries said labels,
- a receiver part, separated from the transmitter part, such that the support (1) carrying the labels can pass along a plane located between the transmitter part and the receiver part, in a direction called the passage direction (X1), and in a plane called the passage plane, the receiver part comprising a receiver (40) arranged to generate an output signal on the basis of a beam (F2) of ultrasonic waves attenuated by the support and/or the labels,
**characterized in that** the transmitter part or the receiver part is arranged so that the beam (F1) of ultrasonic waves transmitted by the transmitter covers, on the support carrying the labels (2), a total surface area (S1) in which the surface area occupied by the spacing between two successive labels is greater than the surface area occupied by the labels.

2. System according to Claim 1, **characterized in that** the transmitter part or the receiver part comprises a deflector (400) having a shape which defines said total surface area.

3. System according to Claim 1, **characterized in that** the transmitter part is arranged to transmit the beam of ultrasonic waves in a direction located in a plane angularly offset from the plane perpendicular to the passage direction (X1) of the labels.

4. Detection system according to Claim 1, **characterized in that** it comprises an angled reflection device arranged in the receiver part, and **in that** the angled reflection device comprises a first deflector (400) arranged to deflect the attenuated beam (F2) of ultrasonic waves towards a second deflector (401), said second deflector being arranged to deflect the attenuated beam of ultrasonic waves towards the receiver (40).

5. System according to Claim 4, **characterized in that** the first deflector has an elongate shape along an axis perpendicular to its direction of deflection.

6. System according to Claim 4, **characterized in that** the second deflector (401) is formed on a plane perpendicular to the passage plane of the support (1), and is orientated around an axis perpendicular to the passage plane, so as to deflect the beam of ultrasonic waves received from the first deflector towards the receiver, in a direction (X3) located in a plane which is inclined relative to a plane perpendicular to the passage plane and parallel to the passage direction of the support carrying the labels.

7. Detection system according to Claim 1, **characterized in that** it comprises an angled reflection device arranged in the transmitter part, and **in that** the angled reflection device comprises a first deflector (402) arranged to deflect the beam (F1) of ultrasonic waves transmitted by the transmitter towards a second deflector along a deflection direction at an angle of between 0° and 90° to the passage direction, said second deflector being arranged to deflect the transmitted beam of ultrasonic waves towards the receiver.

8. System according to Claim 7, **characterized in that** the first deflector (402) is formed on a plane perpendicular to the passage plane of the support (1), and is orientated around an axis perpendicular to the passage plane, so as to deflect the beam of ultrasonic waves received from the transmitter towards the second deflector (403).

9. System according to Claim 7 or 8, **characterized in that** the second deflector (403) has an elongate shape along an axis perpendicular to its direction of deflection.

10. System according to any of Claims 1 to 9, **characterized in that** it comprises a fork having a first branch in which the transmitter part is arranged, and a second branch in which the receiver part is arranged.
